**Europäisches Patentamt**

(19) **European Patent Office**

**Office européen des brevets**

(11) Publication number: **0 085 721**
**B1**

(12) EUROPEAN PATENT SPECIFICATION

(45) Date of publication of patent specification: **02.12.87**

(51) Int. Cl.⁴: **B 60 T 17/02**

(21) Application number: **82902464.5**

(22) Date of filing: **18.08.82**

(86) International application number:
**PCT/JP82/00323**

(87) International publication number:
**WO 83/00668 03.03.83 Gazette 83/06**

(54) **DEVICE FOR DRIVING VACUUM PUMP.**

(30) Priority: **18.08.81 JP 122894/81 u**

(43) Date of publication of application:
**17.08.83 Bulletin 83/33**

(45) Publication of the grant of the patent:
**02.12.87 Bulletin 87/49**

(84) Designated Contracting States:
**DE FR**

(56) References cited:
**FR-A-2 242 885**
**GB-A-1 014 787**
**JP-B-49 044 808**

**Betsuyaku Banai "Mechanism", 30. April 1967,
Gihodo (Tokyo), p. 486-487**

(73) Proprietor: **MITSUBISHI DENKI KABUSHIKI
KAISHA
2-3, Marunouchi 2-chome Chiyoda-ku
Tokyo 100 (JP)**

(72) Inventor: **OGAWA, Hitoshi Mitsubishi Denki K.
K.
Himeji Seisakusho 840, Chiyodacho
Himeji-shi Hyogo 670 (JP)**

(74) Representative: **Sajda, Wolf E., Dipl.-Phys. et al
MEISSNER, BOLTE & PARTNER
Widenmayerstrasse 48 Postfach 86 06 24
D-8000 München 86 (DE)**

Courier Press, Leamington Spa, England.

## Description

The invention relates to a vacuum pump structure, particularly for vehicles, comprising a vacuum pump having a rotor rotatably mounted in a housing, a starter motor coaxially mounted and drivingly connected with the vacuum pump rotor, an overrunning clutch connecting the starter motor to an engine crankshaft, and a starter circuit provided with electromagnetic switch means, energisable both by starter motor contacts and by a pressure sensor, for controlling the starter motor so that the vacuum pump is started and stopped depending on the vacuum to be kept essentially constant in a vacuum reservoir.

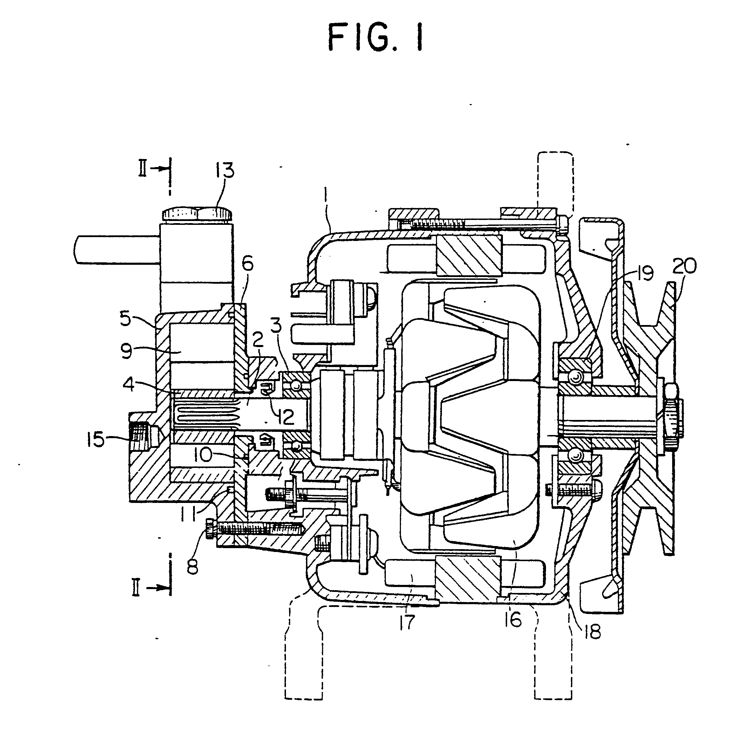

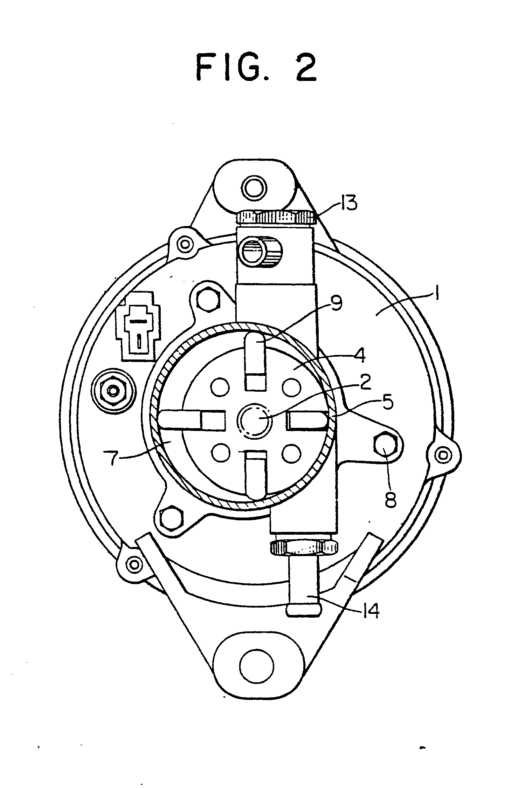

Vacuum pump structures of this type are generally mounted to the rear end portion of an electric generator for motor vehicles and the construction thereof will be described in connection with Figures 1 and 2.

A rear bracket 1 for an electric generator used with a motor vehicle supports a shaft 2 by means of a bearing 3 wherein the shaft 2 is driven by an engine not shown. A first rotor 4 is fixed to the shaft 2 through a spline fitting. Reference numeral 5 designates a housing having an inner cylindrical peripheral surface eccentric from the centers of the shaft and the first rotor 4. A plate 6 is arranged between the rear bracket 1 and the housing 5 to constitute a pump operating chamber 7. A mounting bolt 8 is provided for fixing the housing 5 and the plate 6 to the rear bracket 1. Vanes 9 are radially inserted into slots in the first rotor 4 to be slidable in the radial direction. Packings 10 and 11 are provided for keeping the airtightness of junction surfaces between the rear bracket 1 and the plate 6, and between the plate 6 and the housing 5. An oil seal 12 is fixed to the bracket 1 and contacted by the periphery of the shaft 2 to keep the airtightness of the pump operating chamber 7. A suction port 13, an exhaust port 14 and an oil supply port 15 are provided on the housing 5 and connect the upper and lower portions of the chamber 7 and the rotor slots to a vacuum tank (or a pressure accumulating portion of a master bag), an oil pan and an oil pump respectively, which are not illustrated.

A second rotor 16 is fixed to the shaft 2 to hold a field winding for the electric generator and a stator 17 is provided for holding an armature winding. A front bracket 18 constitutes with the rear bracket 1 an outer frame of the electric generator, and a bearing 19 is fixed to this front bracket 18 and rotatably journals the shaft 2. A pulley 20 is fixed to the shaft 2 to receive the transmission of the rotation from the engine.

The operation of such a vacuum pump structure is as follows. First with respect to the vacuum pump, when the rotation of the engine is transmitted to the pulley 20 by a belt to rotate the shaft 2 in a direction such that the vanes 9 spring outwardly by means of centrifugal force acting on the vanes 9 being rotated while sliding along the inner wall of the housing 5 thereby sucking air from the vacuum tank (or the pressure accumulating portion of the master bag) and propelling the air through the exhaust port 14 to perform the pumping operation. Also, an oil supplied to the interior of the housing 5 through the oil supply port 15 effects lubrication of the sliding surfaces between the vanes 9 and the rotor 4 and is exhausted to the oil pan through the exhaust port 14.

With respect to the electric generator, an alternating current is induced on the stator 17 by cutting a magnetic field generated from the second rotor 16 by means of the rotation of the shaft 2. This alternating current is rectified to a direct current which flows into a charging circuit at one side of a car body.

The electric generator for motor vehicles is generally belt-driven by the engine for a motor vehicle to be used with the number of rotations per minute equal to about twice that of the engine in view of the power generation characteristic thereof. Thus, regarding the vacuum pump directly connected to the generator, it is also used with the same number of rotations per minute as the generator. For this reason, it is used during rapid acceleration and deceleration between a low rotational speed (about 1000 rpm) and a high rotational speed (about 12000 rpm) and also the vacuum pump is continually being operated during the operation of the engine. Thus the components constituting the vacuum pump have been previously required to have the durability and shock resistance with respect to the range of high rotational speeds and long service resulting in an expensive device. Also, since the electric generator is driven through the belt, there has been the disadvantage that a vacuum cannot be obtained when the belt is broken since the vacuum pump then stops.

A vacuum structure as initially specified is known for example from JP—B2—49/44808 wherein a permanent connection is provided between the starter motor and the clutch connecting the starter motor to the engine. The respective components are mounted on different shafts which are separated from each other. The description is silent as to the structure and the function of the overrunning clutch, but at least there is no connection between the electromagnetic switch means and the overrunning clutch.

While idle running is possible for the rotor of the starter motor in the device according to the publication JP—B2—49/44808 since an overrunning clutch is provided in the structure no measures are provided so that the rotor can be positively separated from the crankshaft. Also, nothing is disclosed in order to obtain a compact construction for the vacuum pump structure in question.

A rotary vacuum pump having a modular structure wherein the vanes are eccentrically and slidably mounted in a housing in contact with the inner peripheral surface of the housing is disclosed in FR—A—2 242 885. Such a vacuum pump may be suitable for quite a number of purposes, however, the document is silent as to the problem of controlling the operation of the vacuum pump and obtaining a longer lifetime and reliability of such a structure.

A device for driving a pump from an internal combustion engine starter motor is described in GB—A—1 014 787. This prior art device consists of a hydraulic shifting device for a change-speed transmission of a vehicle having an internal combustion engine and one or more actuators and a gear-shift member for changing the transmission ratio of the change-speed transmission. The pump structure described is a pressure medium pump, not a vacuum pump. The pressure pump itself consists of two meshing gears in a housing feeding the hydraulic pressure medium from a sump to a control slide valve, wherein a bypass conduit is provided for returning the pressure medium to the sump when it is not needed. Accordingly, the problems of a reliable vacuum pump structure do not arise.

The object underlying the invention is to provide for a vacuum pump structure having a compact design without requiring expensive components while being capable of performing a reliable operation at a constant speed irrespective of the speed of the engine.

The invention solves this problem in an advantageous manner and is characterized in that the rotor of the vacuum pump is mounted directly on the shaft of the engine starter motor, the overrunning clutch is integrally assembled with a pinion gear slidable with respect to the shaft, in that the electromagnetic switch means is fixed to the bracket housing the starter motor and is provided with a force transmitting plunger movable essentially parallel to the shaft, and in that the plunger is connected to the assembly of overrunning clutch and pinion gear by means of a shift lever pivotally mounted around a fulcrum formed by the bracket and the shift lever, so that the shift lever mechanically slides the overrunning clutch and pinion gear assembly into engagement with a ring gear disposed on the engine crankshaft, when the electromagnetic switch means is energised, and returns the assembly to disengage the pinion gear from said ring gear, whereby the driving connection between the interconnected vacuum pump rotor and starter motor and the engine crankshaft is separated, when the starter motor contacts are opened during starting the engine.

According to the present invention, a vacuum pump structure is provided which can be realized in a compact construction and can be operated at a constant rotational speed since it is driven by the starter motor. This results in that a vacuum pump cheap and nevertheless high in reliability can be used which does not require the durability at high rotational speeds such as is necessary in conventional devices.

One way of carrying out the invention is described in detail below with reference to drawings which illustrate only one specific embodiment, in which

Fig. 1 is a sectional view illustrating a conventional device;

Fig. 2 is a sectional view along line II—II in Fig. 1; and

Fig. 3 is a sectional view illustrating one embodiment of the present invention.

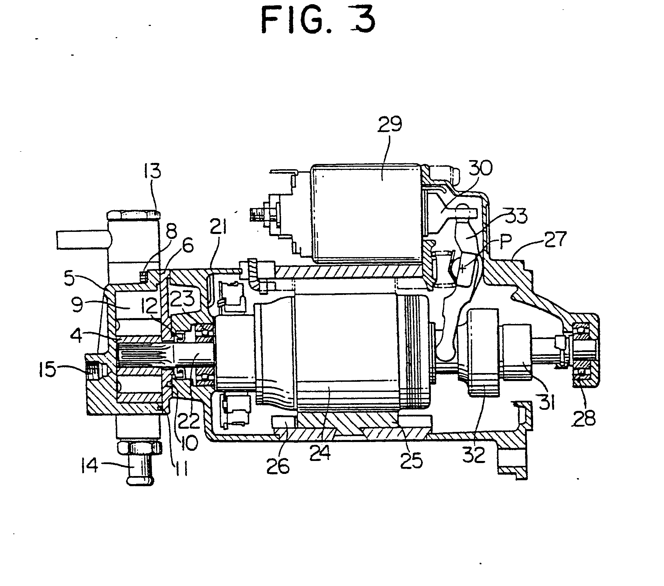

In the following description reference is made to Fig. 3 showing one embodiment, wherein a rear bracket 21 is provided for a starter motor, and a shaft 22 is rotatably journaled in a bearing 23 carried by this rear bracket 21. Fixed to this shaft 22 is an armature 24. A field iron core 25 is provided to oppose this armature 24 in radial direction, and a field winding 26 is wound on this field iron core 25.

A front bracket 27 is provided, and a bearing 28 is fixed to this front bracket 27 which rotatably journals the shaft 22. An electromagnetic switch 29 is fixed to the front bracket 27, and a plunger 30 is one of the components constituting this electromagnetic switch 29. The electromagnetic switch 29 is energised by starter motor contacts. The starter motor contacts, when operated, pull the plunger 30 in a lefthand direction, while further contacts are operated when the plunger 30 has been moved in the lefthand direction. A pressure sensor is connected to the vacuum tank or the pressure accumulating portion of the master bag, the pressure sensor being connected to a circuit including the armature 24 and the field winding 26. A pinion gear 31 capable of meshing with a ring gear for an engine (not shown) and an overrunning clutch 32 is integrally assembled with the pinion gear 31 and slidable with respect to the shaft 22. A shift lever 33 is connected to the plunger 30 and the overrunning clutch 32. A fulcrum P is provided by the shift lever 33 and acting between the shift lever 33 and the front bracket 27.

During starting of the engine, the starter motor contacts are first closed by a key switch not shown to energise an electromagnetic circuit including the electromagnetic switch 29 to draw the plunger 30 in the lefthand direction. Thereby the shift lever 33 connected to the plunger 30 is rotated about the fulcrum P to cause the overrunning clutch 32 and the pinion gear 31 to slide in a righthand direction along the shaft 22. The pinion gear 31 after sliding meshes with the ring gear disposed on the engine shaft side. Under these circumstances, due to the further contacts closed by the left hand movement of the plunger 30, a current flows through the armature 24 and the field winding 26 to rotate the armature 24. Thereby the pinion gear 31 rotates the ring gear to drive the engine. At that time, the vacuum pump 4 performs the pumping operation similarly to that of conventional devices.

When the engine speed rises, the rotational speed of the engine becomes higher than that of the armature 24. Thus the overrunning clutch 32 causes the pinion gear 31 to idle in order to protect the armature 24. If the starter motor contacts in the meantime have been opened the plunger 30 moves to the right to open the further contacts in order to stop the rotation of the armature 24 and to return the pinion gear 31 and the overrunning clutch 32 back to their original positions to complete the starting of the engine.

After the starting of the engine, the degree of vacuum is sensed by the pressure sensor connected to the vacuum tank or the pressure accumulating portion of the master bag, and when the degree of vacuum decreases to a predetermined value or less, the pressure sensor operates to energise the circuit including the armature 24 and the field winding 26 to drive the vacuum pump with a constant rotational speed to provide a vacuum. When the degree of vacuum in the vacuum tank or the pressure accumulating portion of the master bag is reached, this is sensed by the pressure sensor to stop the vacuum pump. According to instances, it is also possible to provide the vacuum by closing the further contacts alone to operate the vacuum pump at the constant rotational speed after the engine has been switched off.

Although the rear bracket 21 and the plate 6 have been formed of separate members in the described embodiment, they may be formed by a single member.

Also, in the above embodiment the description has been given in conjunction with an oil lubrication system vacuum pump 4, but a non-lubrication system vacuum pump 4 may also be used.

As described above and according to the invention, a vacuum pump has been provided which is driven by a starter motor and therefore the operation can be effected at a constant rotational speed. Thus there is the result that a vacuum pump cheap and nevertheless high in reliability is provided because it does not require the durability and a high rotational speed such as is necessary in conventional devices and also because it is driven directly by the motor.

### Claim

A vacuum pump structure, particularly for vehicles, comprising
— a vacuum pump (4, 5) having a rotor (4) rotatably mounted in a housing (5),
— a starter motor (24—26) coaxially mounted and drivingly connected with the vacuum pump rotor (4),
— an overrunning clutch (32) connecting the starter motor (24—26) to an engine crankshaft, and
— a starter circuit provided with electromagnetic switch means (29), energisable both by starter motor contacts and by a pressure sensor, for controlling the starter motor (24—26) so that the vacuum pump (4, 5) is started and stopped depending on the vacuum to be kept essentially constant in a vacuum reservoir,
characterized in that the rotor (4) of the vacuum pump (4, 5) is mounted directly on the shaft (22) of the engine starter motor (24—26), the overrunning clutch (32) is integrally assembled with a pinion gear (31) slidable with respect to the shaft (22),
in that the electromagnetic switch means (29) is fixed to the bracket (27) housing the starter motor (24—26) and is provided with a force transmitting plunger (30) movable essentially parallel to the shaft (22), and

in that the plunger (30) is connected to the assembly of overrunning clutch (32) and pinion gear (31) by means of a shift lever (33) pivotally mounted around a fulcrum (P) formed by the bracket (27) and the shift lever (33), so that the shift lever (33) mechanically slides the overrunning clutch and pinion gear assembly (31, 32) into engagement with a ring gear disposed on the engine crankshaft, when the electromagnetic switch means (29) is energised, and returns the assembly (31, 32) to disengage the pinion gear (31) from said ring gear, whereby the connection between the interconnected vacuum pump (4, 5) and starter motor (24—26) and the engine crankshaft is separated, when the starter motor contacts are opened during starting the engine.

### Patentanspruch

Unterdruckpumpenanordnung, insbesondere für Fahrzeuge, umfassend
— eine Unterdruckpumpe (4, 5) mit einem Rotor (4), der drehbar in einem Gehäuse (5) montiert ist,
— einen Anlassermotor (24—26), der koaxial montiert und antriebsmäßig verbunden ist mit dem Unterdruckpumpenrotor (4),
— eine Freilaufkupplung (32), die den Anlassermotor (24—26) mit einer Motorkurbelwelle verbindet, und
— und eine Anlasserschaltung, die mit einer elektromagnetischen Schalteinrichtung (29) versehen ist, die sowohl durch Anlassermotorkontakte als auch durch einen Druckmeßfühler erregbar ist, um den Anlassermotor (24—26) so zu steuern, daß die Unterdruckpumpe (4, 5) in Abhängigkeit von dem Unterdruck, der in einem Unterdruckbehälter im wesentlichen konstant gehalt werden soll, gestartet und gesteuert wird,
dadurch gekennzeichnet, daß der Rotor (4) der Unterdruckpumpe (4, 5) direkt auf der Welle (22) des Maschinenanlassermotors (24—26) montiert ist, wobei die Freilaufkupplung (32) integral mit einem Ritzel (31) montiert ist, das in Bezug auf die Welle (22) verschiebbar ist,
daß die elektromagnetische Schalteinrichtung (29) an der Halterung (27), in der der Anlassermotor (24—26) untergebracht ist, befestigt und mit einem Kraftübertragungskolben (30) versehen ist, der im wesentlichen parallel zu der Welle (22) beweglich ist,
und daß der Kolben (30) mit der Anordnung von Freilaufkupplung (32) und Ritzel (31) mit einem Verschiebungshebel (33) verbunden ist, der drehbar um einen Hebeldrehpunkt (P) montiert ist, der von der Halterung (27) und dem Verschiebungshebel (33) gebildet wird,
so daß der Verschiebungshebel (33) die Freilaufkupplungs- und Ritzelanordnung (31, 32) mechanisch in Eingriff mit einem auf der Kurbelwelle angeordneten Zahnrad verschiebt, wenn die elektromagnetische Schalteinrichtung (29) erregt wird, und die Anordnung (31, 32) wieder zurückholt, um das Ritzel (31) mit dem Zahnrad außer Eingriff zu bringen, so daß die Verbindung zwischen der Unterdruckpumpe (4, 5) und dem damit verbundenen Anlassermotor (24—26) sowie der Maschinenkurbelwelle getrennt wird, wenn die Anlassermotorkontakte während des Anlassens der Maschine geöffnet werden.

**Revendication**

Une structure de pompe à vide, particulièrement pour véhicules, comprenant

— une pompe à vide (4, 5) ayant un rotor (4) monté de façon rotative dans un boîtier (5),

— un moteur de démarrage (24—26) monté coaxialement au rotor (4) de la pompe à vide et relié de façon entraînée à celui-ci,

— un embrayage de survitesse (32) reliant le moteur de démarrage (24—26) à l'arbre-manivelle du moteur, et

— un circuit de démarrage pourvu d'un moyen de commutation électromagnétique (29), actionnable à la fois par des contacts du moteur de démarrage et par un détecteur de pression, pour commander le moteur de démarrage (24, 26) de sorte que la pompe à vide (4, 5) soit démarrée et arrêtée suivant le vide à conserver essentiellement constant dans un réservoir sous vide,

caractérisé en ce que le rotor (4) de la pompe à vide (4, 5) est monté directement sur l'arbre (22) du moteur de démarrage du moteur (24—26), l'embrayage de survitesse (32) est assemblé intégralement avec un engrenage à pignon (31) coulissant par rapport à l'arbre (22),

en ce que le moyen de commutation électromagnétique (29) est fixé au support (27) contenant le moteur de démarrage (24—26) et est pourvu d'un plongeur mobile de transmission de force (30) essentiellement parallèle à l'arbre (22), et

en ce que le plongeur (30) est relié à l'ensemble de l'embrayage de survitesse (32) et de l'engrenage à pignon (31) au moyen d'un levier de commande (33) monté pivotant autour d'un centre de rotation (P) formé par le support (27) et le levier de commande (33), de sorte que le levier de commande (33) coulisse mécaniquement l'ensemble embrayage de survitesse et engrenage à pignon (31, 32) en engagement avec une couronne dentée disposée sur l'arbre-manivelle du moteur, lorsque le moyen de commutation électromagnétique (29) est excité, et ramène l'ensemble (31, 32) pour désengager l'engrenage à pignon (31) de la couronne dentée, ainsi la connexion entre la pompe à vide (4, 5) et le moteur de démarrage (24—26) interconnectés et l'arbre-manivelle du moteur soit séparée, lorsque les contacts du moteur de démarrage sont ouverts pendant le démarrage du moteur.

# FIG. 1

# FIG. 2

# FIG. 3